# EUROPÄISCHE PATENTANMELDUNG

(11) **EP 0 622 790 A2**
(43) Veröffentlichungstag der Anmeldung: **02.11.1994**
(21) Anmeldenummer: 94105360.5
(22) Anmeldetag: 07.04.1994
(51) Int. Cl.: G11B 7/24, G11B 7/26

(54) **Selektiv veränderbarer, optischer Datenspeicher und Verfahren zu seiner Herstellung**

(30) Priorität: 24.04.1993 DE 4313478
(71) Anmelder: INSTITUT FÜR MIKROTECHNIK MAINZ GmbH, D-55129 Mainz-Hechtsheim (DE)
(72) Erfinder: Ehrfeld, Wolfgang, Prof. Dr., D-55116 Mainz (DE); Abraham, Michael, Dr., D-55129 Mainz (DE); Amato, Jean-Pierre, D-65428 Rüsselsheim (DE); Bauer, Hans-Dieter, Dr., D-55288 Partenheim (DE); Moser, Herbert O., Dr.-Ing., D-76227 Karlsruhe (DE)
(74) Vertreter: Fuchs, Luderschmidt & Partner Patentanwälte

(57) **Zusammenfassung**

Es wird ein selektiv veränderbarer, optischer Datenspeicher (1) beschrieben, der zwischen zwei Platten (8) und (9) eine Kammerschicht (7) mit Kammern (4) aufweist, in die ein optisches Speichermedium (25) in Form eines Gemisches von Feststoffteilchen mit einer flüssigkristallinen Phase eingebracht ist. Der optische Datenspeicher (1) kann in Form einer CD oder als Kreditkarte gefertigt werden. Der Datenspeicher (1) wird dadurch hergestellt, daß zunächst eine der beiden Platten (8) oder (9) mit der Kammerschicht (7) verbunden wird, daß dann das optische Speichermedium in die Kammern eingebracht wird, was vorzugsweise im Vakuum durchgeführt wird, und daß die Kammerschicht anschließend mit der zweiten Platte verbunden wird. Die Kammern können in die Kammerschicht (7) eingeprägt werden. Es können aber auch Filtermembrane mit Poren oder Zeolith verwendet werden.

## Beschreibung

Die Erfindung betrifft einen selektiv veränderbaren, optischen Datenspeicher gemäß des Oberbegriffs von Anspruch 1. Die Erfindung bezieht sich auch auf ein Verfahren zur Herstellung solcher optischer Datenspeicher.

Mit optischen Datenspeichern können die Speicherdichten der bislang etablierten Informationsmedien deutlich übertroffen werden. Es wird daher angestrebt, das Potential optischer Datenspeicher für die stark expandierende Computertechnik nutzbar zu machen.

Höchstintegrierte Schaltkreise ermöglichen den Zugriff auf 4M-Bit-DRAM von Halbleiterspeichern und die Bewältigung anspruchsvoller Software. Damit verbunden ist die Notwendigkeit, immer größere Datenmengen resident zu speichern und die Datenablage in immer kompakterer und robusterer, d.h. anwenderfreundlicherer Form vorzunehmen.

Es sind einmal beschreibbare optische Datenspeicher bekannt, mit denen der Anwender durch eine irreversible physikalische Umwandlung des Speichermediums, die durch die Einstrahlung von Laserlicht ausgelöst wird, selbst Informationen aufzeichnen kann. Bisher sind folgende Verfahren bekannt:
Bildung von Löchern (Pits), Blasen und Beulen, Veränderungen der Oberflächentextur, Phasenwechsel, Schalten von flüssigkristallinen Phasen, Legieren von Metallfilmen und photochrome Farbwechsel.

In den meisten Fällen wird durch den Markierungsprozeß die Reflektivität des Speichermediums verändert, d.h. an den vom Laserstrahl erhitzten Stellen entstehen Datenflecken, deren Reflektivität sich von der des umgebenden Mediums unterscheidet.

Es sind bereits auch löschbare optische Datenspeicher bekannt, bei denen der physikalische Markierungsprozeß reversibel ist, so daß der Anwender Daten nicht nur speichern, sondern auch löschen kann. Derartige Speicher wurden bisher auf der Basis von magnetooptischen Materialien, reversiblen Phasentransformationen und photochromen Farbstoffen entwickelt. Bei den erstgenannten wird der magnetooptische Effekt, d.h. die Drehung der Polarisationsebene von linear polarisiertem Laserlicht bei Reflexion an oder Transmission durch magnetisierte Materie genutzt, um magnetische Domänen als Datenflecken zu detektieren. Der Phasenwechsel zwischen kristallin und amorph führt zu einer Veränderung der Reflektivität des Speichermediums. Photochrome Farbstoffe weisen tautomere Formen mit unterschiedlicher Absorption auf.

Es hat sich jedoch gezeigt, daß die Einschreib- und Löschzeiten von Informationen zu gering sind, um eine breite Anwendung zu ermöglichen. Aus der DE 42 11 502.7 ist ein selektiv veränderbarer optischer Datenspeicher bekannt, bei dem sich zwischen zwei Platten, von denen mindestens eine transparent ist, ein nematisches Flüssigkristallmaterial befindet, in dem nanodisperse Festkörperpartikel verteilt sind. Durch einen Laserstrahl kann das System vom transparenten in einen stark lichtstreuenden Zustand gebracht werden. Legt man eine Spannung von 100 Volt und mehr an die Elektroden an, die sich auf den Platten befinden, so wird der streuende Zustand wieder gelöscht. Kombiniert man eine kleinere Spannung von einigen Volt mit einem Laserstrahl, so kann man überschreiben.

Bisher ist dieses optische Speichersystem starr, d.h. es darf keine Bewegungen innerhalb der nematischen Flüssigkristallphase geben, da sonst die Information verloren geht. Da die Datenspeicher in Laufwerken hoher Geschwindigkeit und somit entsprechend hoher Zentrifugalkraft ausgesetzt sind, kann sich der Informationsgehalt verändern. Gleiches gilt, wenn - wie es z.B. bei Kreditkarten oft der Fall ist - diese großen Biegekräften ausgesetzt sind.

Außerdem muß der Speicher formatiert werden, d.h. Informationen über die Lage der Datenspuren müssen geschrieben werden.

Aus der US 4,752,820 ist ein optischer Datenspeicher bekannt, der zwischen zwei Platten, von denen eine transparent ist, flüssigkristallines Material als Speichermedium aufweist. Eine der beiden Platten kann Spuren in Form von Rillen aufweisen, wobei diese Rillen allerdings mit der gesamten Flüssigkristallschicht zwischen den Platten in Verbindung stehen.

Die US 3,821,720 beschreibt einen optischen Datenspeicher, bei dem die flüssigkristalline Schicht begrenzenden Platten über einen Abstandshalter voneinander getrennt sind, so daß eine einzige große Kammer gebildet wird.

Auch bei diesen bekannten Datenspeichern kann sich bei hohen Laufgeschwindigkeiten aufgrund der auftretenden Zentrifugalkräfte der Informationsgehalt verändern.

Aufgabe der Erfindung ist es daher, einen optischen Datenspeicher zu schaffen, dessen Informationsgehalt sich bei mechanischen Belastungen oder Auftreten von Zentrifugalkräften nicht verändert. Die Herstellung solcher Datenträger soll auf einfache und kostengünstige Weise möglich sein.

Diese Aufgabe wird gelöst mit einem selektiv veränderbaren, optischen Datenspeicher gemäß Patentanspruch 1. Das erfindungsgemäße Verfahren ist Gegenstand des Patentanspruchs 15.

Das Speichermedium wird dadurch räumlich fixiert, daß es in Kammern eingeschlossen wird, wobei die Größe der Kammern, d.h. die Fläche, die die Kammern in Draufsicht einnehmen, an die Quelle der elektromagnetischen Strahlung oder an die erreichbare Fokussierung der elektromagnetischen Strahlung angepaßt ist. Vorzugsweise werden Laser oder LEDs eingesetzt. Hierbei kann die räumliche Ausdehnung der Kammer kleiner sein als die effektive Brennpunktsfläche der elektromagnetischen Strahlung, solange der Abstand zur benachbarten Kammer groß genug ist, damit bei Bestrahlung einer Kammer die Nachbarkammer nicht beinflußt wird. Vorzugsweise weisen die Kammern in Draufsicht eine Fläche unter 0,5 µm² auf. Der seitliche Abstand der Kammern kann Werte bis zu 0,2 µm erreichen.

Die Kammern können regelmäßig, z.B. in konzentrischen spiralförmigen oder parallelen Spuren angeordnet sein oder unregelmäßig über die Kammerschicht verteilt sein.

Form und Größe der Kammer können unterschiedlich ausgebildet sein. So können die Kammern als submikroskopische Gruben oder Inseln in der Kammerschicht vorliegen, die z.B. durch radiale oder azimutale Stege voneinander getrennt sind. Die Kammerwände erfüllen nebenbei auch die Funktion der Abstandshalter zwischen den Platten.

Ein weiterer Vorteil von regelmäßig angeordneten Kammern besteht darin, daß der optische Datenspeicher nicht formatiert werden muß, da sich die Lage der Kammern und somit der Datenspuren nicht ändern kann. Die Regelmäßigkeit der Anordnung der Teilvolumina kann zur Synchronisation bei Gleichlaufschwankungen und zur Spurhaltung ausgenutzt werden.

Die Kammern sind einseitig oder beidseitig offen, so daß der Speichermedium an die jeweils der Kammerschicht benachbarte Platte angrenzt. Als Kammern können auch Poren der Kammerschicht dienen, die vozugsweise als durchgehende Poren ausgebildet sind. Als Kammerschichtmaterial können Polymere verwendet werden, die vorzugsweise transparent sind, oder Filtermembrane und Zeolith, wenn eine unregelmäßige Verteilung der Kammern gewünscht wird.

Bedingt durch die Kleinheit der Kammern, die die Größenordnung der Wellenlänge des verwendeten Lichtes erreichen kann, treten starke Beugungs- und Streueffekte auf. Dieser störende Effekt kann auch bei der Verwendung von mikroporösen Materialien auftreten. Dies kann dadurch vermieden werden, daß das Material der Kammerschicht und das Speichermedium einen etwas gleich großen Brechungsindex aufweisen. Durch diese Anpassung der Brechungsindizes verschwinden die Grenzflächen optisch und die störenden Beugungs- bzw. Streueffekte werden vermieden. Die Anpassung der Brechungsindizes kann mit bekannten Methoden entweder am flüssigkristallinen Material des Speichermediums oder an der Zusammensetzung des für dei Kammern verwendeten Materials vorgenommen werden.

Die Kammerschicht kann auch durch Kombination von Photolithographie und geeigneten Abscheidungsverfahren aus einem transparenten Dielektrikum erzeugt werden. Dazu eignet sich besonders gut Siliziumoxinitrid, bei dem der Brechungsindex an den des Speichermediums gut angepaßt werden kann.

Die Dicke der Kammerschicht kann bis zu 3 µm betragen und liegt vorzugsweise im Bereich von 2 bis 3 µm, wobei die erreichbare minimale Dicke der Kammerschicht materialabhängig ist.

Die Platten, die die Kammerschicht begrenzen, tragen als Elektroden an ihrer Innenseite jeweils eine elektrisch leitende Beschichtung. Vorzugsweise ist diese elektrisch leitende Beschichtung auf mindestens einer Platte als reflektierende Schicht ausgebildet. In diesem Fall ist die jeweils andere Platte und auch das Kammerschichtmaterial transparent. Je nach Form und Einsatzzweck des optischen Datenspeichers - z.B. als runde Scheibe oder Kreditkarte - sind die Elektroden auf die Außenseite der Platten herausgeführt, so daß über geeignete Kontakte die gewünschte Spannung an die Elektroden angelegt werden kann.

Um größere Datenmengen, die einem zusammenhängenden Bereich der Kammerschicht angehören, gleichzeitig löschen zu können, ohne den gesamten Dateninhalt des Speichermediums löschen zu müssen, können auf einer Seite des Speichermediums mehrere, einzeln ansteuerbare Elektroden nebeneinander angeordnet sein.

Eine andere Möglichkeit besteht darin, die Platten aus leitfähigem Polymermaterial zu fertigen, so daß auf die Aufbringung einer elektrisch leitenden Beschichtung verzichtet werden kann. Die Platten übernehmen damit gleichzeitig die Funktion der Elektroden.

Das erfindungsgemäße Verfahren zur Herstellung solcher optischer Datenspeicher beruht darauf, daß zunächst eine der beiden Platten mit der Kammerschicht verbunden wird, daß dann das optische Speichermedium in die Kammern eingebracht wird und daß anschließend die Kammerschicht mit der zweiten Platte verbunden wird.

Die Kammerschicht kann vor dem Verbinden mit der ersten Platte bereits strukturiert sein. Es ist aber auch möglich, die Kammern nach dem Aufbringen auf die erste Platte mittels eines geeigneten Werkzeuges einzubringen. Die Kammern können eingeprägt werden, wobei die Prägung so durchgeführt wird, daß sich die Kammern möglichst vollständig durch die gesamte Dicke der Kammerschicht erstrecken. Als Prägewerkzeuge eignen sich z.B. solche, die auf röntgenlithographischem Wege nach der LIGA-Technik hergestellt sind.

Gemäß einer anderen Ausführungsform wird für die Kammerschicht ein Resistmaterial vorgesehen und die Kammern werden photolithographisch oder röntgenlithographisch hergestellt.

Eine andere Verfahrensvariante sieht vor, die Kammern als Vertiefungen oder als Durchgangslöcher mittels Beschuß von Strahlung oder Teilchen herzustellen. Hierzu können Excimerlaser, Elektronenstrahlen oder feinfokussierte Ionenstrahlen eingesetzt werden.

Als optisches Speichermedium kommen vorzugsweise solche Medien in Frage, die das Löschen und Wiederbeschreiben mit Informationen unter Einwirkung von elektrischer Spannung und elektromagnetischer Strahlung ermöglichen. Als Speichermedium wird vorzugsweise ein Gemisch von Feststoffteilchen mit einer flüssigkristallinen Phase in die Kammern eingebracht. Beispielsweise können solche Speichermedien verwendet werden, die in der DE 42 11 502.7 beschrieben werden.

Das Befüllen der Kammern erfolgt entweder im Tauchbad oder durch Aufsprühen oder Aufgießen, wobei überschüssiges Material nach diesem Vorgang entfernt wird. Vorzugsweise erfolgt das Befüllen des optischen Speichermediums im Vakuum, um sicherzustellen, daß in den Kammern keine zusätzlichen Luftblasen enthalten sind. Durch eine Erwärmung der Kammerschicht kann der Füllvorgang erleichtert und beschleunigt werden.

Beispielhafte Ausführungsformen der Erfindung werden nachfolgend anhand der Zeichnungen näher erläutert.

Es zeigen:
- Figur 1: die perspektivische Darstellung eines optischen Datenspeichers in Form einer runden Scheibe,
- Figuren 2 bis 4: die Herstellung der in Figur 1 gezeigten Scheibe,
- Figur 5: den Schnitt durch einen optischen Datenspeicher gemäß einer weiteren Ausführungsform,
- Figur 6: einen optischen Datenspeicher gemäß einer weiteren Ausführungsform und
- Fiur 7: den in Figur 1 gezeigten optischen Datenspeicher in eingebautem Zustand in einem Laufwerk.

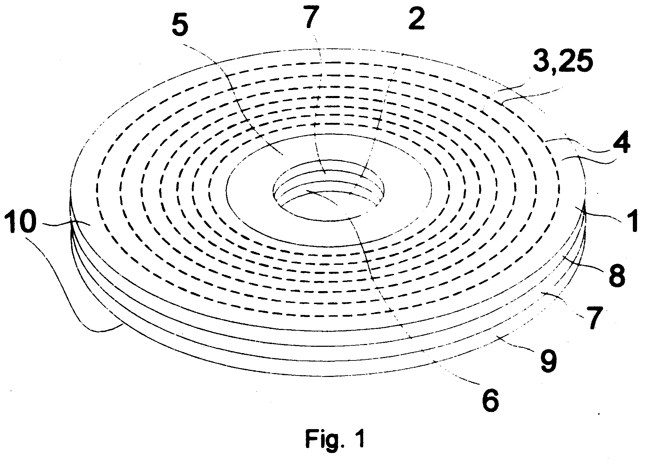

In der Figur 1 ist ein optischer Datenspeicher 1 dargestellt, der die Abmessungen einer CD-Platte aufweist. Der optische Datenspeicher 1 ist mehrschichtig aufgebaut, indem zwischen einer ersten und einer zweiten Platte 8, 9 eine Kammerschicht 7 angeordnet ist. In der Kammerschicht 7 sind eine Vielzahl von in konzentrischen Spuren 3 angeordneten Kammern 4 vorgesehen, in denen sich das Speichermedium 25 befindet. Die beiden Platten 8 und 9 sind mit einer elektrisch leitenden Beschichtung als Elektroden 5 und 6 versehen, die zumindest teilweise auch auf der Außenseite 10 der Platten 8 und 9 aufgebracht ist.

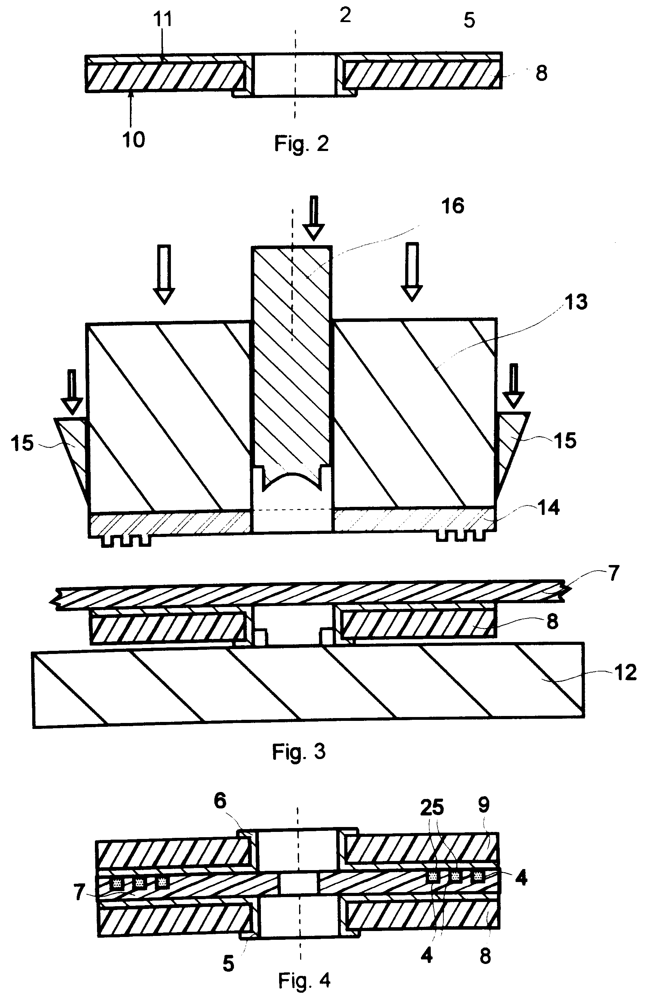

In der Figur 2 ist der Schnitt durch eine Platte 8 dargestellt, die gemäß der hier gezeigten Ausführungsform aus Polymermaterial besteht. Auf der Innenseite 11 der Platte 8 ist eine elektrisch leitende Beschichtung als erste Elektrode 5 aufgebracht, wobei auch die Wände der zentralen Bohrung 2 und die Außenfläche 10 teilweise mit der Beschichtung belegt sind. Auf die gleiche Art und Weise wird eine zweite Platte 9 hergestellt, bei der jedoch die Elektrode 6 transparent bleiben muß, was mit einer etwa 20 nm dicken Schicht aus Aluminium, Titan oder ähnlichem Material erfüllt werden kann. Die Elektrode 5 auf der ersten Platte 8 kann ggf. als Spiegelfläche ausgebildet sein.

Die erste Platte 8 wird - wie in der Figur 3 gezeigt ist - auf einem Träger 12 fixiert und anschließend wird eine z.B. 10 µm dicke Folie als Kammerschicht 7 aufgelegt. Die Kammerschicht 7 besteht aus einem Polymermaterial, wie z.B. Polycarbonat und wird aufgeklebt oder heiß aufgepreßt. Mittels eines Stempels 13, der an seiner Unterseite eine mikrostrukturierte Platte 14 aus z.B. Nickel trägt, deren räumliche Struktur komplementär zu der der Kammern 4 ist, werden in die Kammerschicht 7 die Kammern 4 eingeprägt. Mittels der Stanzwerkzeuge 15 und 16 werden die Ränder der Kammerschicht 7 beschnitten und die zentrale Bohrung 2 eingebracht. Auf diese Weise wird die Kammerschicht in einem Arbeitsgang aufgebracht und durch Prägen strukturiert. Der Träger 12 und der Stempel 13 können ggf. beheizbar sein.

In einem weiteren Verfahrensschritt wird das optische Speichermedium 25 im Tauchbad oder durch Aufsprühen in die Kammern eingefüllt, wobei dieser Verfahrensschritt im Vakuum durchgeführt wird. Überschüssiges Material wird von der Oberfläche der Kammerschicht 7 abgestreift.

Anschließend wird die mit Klebstoff versehene zweite Platte 9 auf die so vorbereitete Kammerschicht 7 aufgedrückt (Figur 4). Die gesamte Dicke des optischen Datenspeichers entspricht etwa der einer normalen Compakt-Disc.

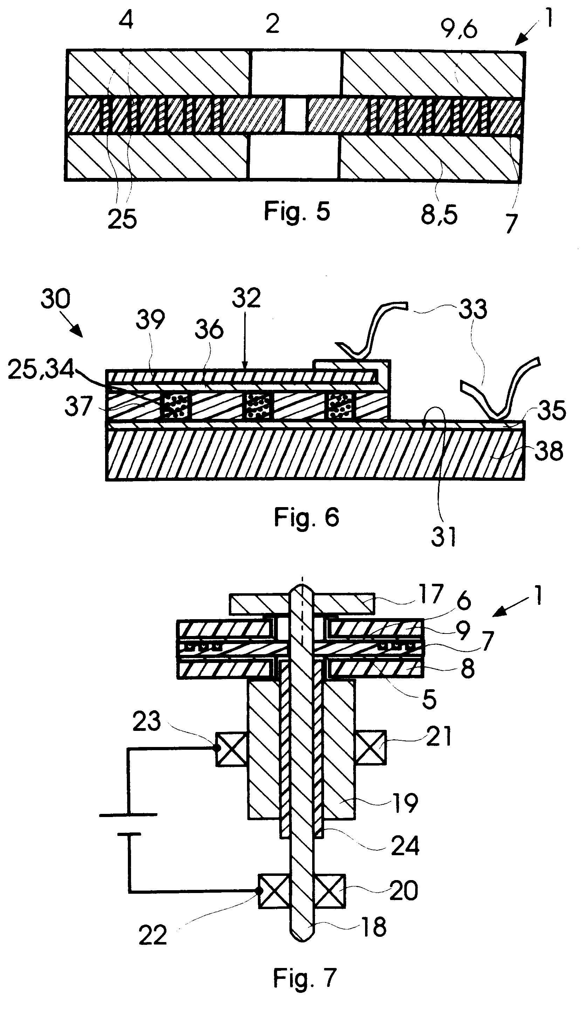

In der Figur 5 ist der Schnitt durch eine weitere Ausführungsform des optischen Datenspeichers 1 dargestellt. Die Platten 8 und 9 bestehen aus transparentem elektrisch leitendem Polymermaterial, z.B. Tetraselenotetrazen in einer Polycarbonat-Matrix, so daß auf eine elektrisch leitende Beschichtung für die Ausbildung der Elektroden 5 und 6 verzichtet werden kann. Die Platten 8 und 9 bilden somit gleichzeitig die Elektroden 5 und 6.

Die Kammerschicht 7 besitzt Kammern 4 in Form von durchgehenden Löchern, so daß das darin befindliche optische Speichermedium 25 in Kontakt mit beiden Platten 8 und 9 ist.

In der Figur 6 ist eine weitere Ausführungsform dargestellt, die sich auf einen selektiv veränderbaren Datenspeicher 30 im Kreditkartenformat bezieht. Bisher werden in diesem Format einmal beschreibbare optische Datenspeicher (WORM-Typ) mit einer Speicherkapazität von bis zu 4 MB hergestellt. Die in der Figur 6 dargestellte Ausführungsform sieht vor, einen gekammerten Datenträger als wiederbeschreibbaren optischen Datenspeicher auf der Basis gefüllter bistabiler Nematen im Kreditkartenformat herzustellen. Der Schichtaufbau entspricht in seiner Struktur derjenigen des oben beschriebenen Datenträgers. Auf einer ersten Platte 38, die aus Polycarbonat bestehen kann, wird mit bekannten Verfahren auf die spätere Innenseite 31 eine leitende Schicht als erste Elektrode 35 aufgebracht. Anschließend wird eine mikroporöse Schicht als Kammerschicht 37 durch Kleben oder Pressen aufgebracht. Hierbei kann es sich auch um eine polymere mikrostrukturierte Platte handeln, die, wie oben beschrieben, durch Pressen mit Hilfe eines geeigneten Formwerkzeuges hergestellt wird. Es kann aber auch ein anderes mikroporöses Material Verwendung finden, wie z.B. zeolithartiges Material oder Filtermembrane. Hierbei ist es wichtig, daß die Bistabilität des flüssigkristallinen Speichermediums erhalten bleibt und gleichzeitig die Stabilität der eingeschriebenen Informationen gewährleistet wird. Nachdem die Kammern 34 mit dem optischen Speichermedium gefüllt worden sind, wird abschließend das Schichtsystem mit einer zweiten Platte 39 verschlossen, die vorher mit einer transparenten Elektrode 36 versehen wurden, die sich über die Innenseite 31 der zweiten Platte 39 und teilweise über die Außenseite 32 erstreckt.

Anders als im Falle des in Figur 1 dargestellten Datenspeichers in Form einer Compact-Disc wird die Speicherkarte in der Schreib-Lese-Einheit linear bewegt. Deshalb ist zur Kontaktierung der leitenden Schichten eine einfache Klemmung, z.B. über bewegliche Anschlußkontakte bzw. Gleitkontakte 33 ausreichend. Für den Fall der Rasterung des Schreib-Lese-Strahls genügt ein einfacher Steckkontakt.

In der Figur 7 ist die in Figur 1 gezeigte Datenspeicherplatte 1 in einem Laufwerk angeordnet, das über leitende Wellenteile 18, 19 und über eine bewegliche Kappe 17 verfügt, über die die beiden Elektroden 5 und 6 auf das jeweils gewünschte Potential gelegt werden können. Die Wellenteile 18 und 19 sind über eine Isolierschicht 24 voneinander getrennt und über zugeordnete Kugellager 20, 21 mit je einer Klemme 22, 23 einer Spannungsquelle verbunden. Das zum Schreiben und Lesen verwendete Lasersystem entspricht dem eines CD-Laufwerkes.

### Bezugszeichen:

- 1: Datenspeicher
- 2: zentrale Bohrung
- 3: Spur
- 4: Kammer
- 5: erste Elektrode
- 6: zweite Elektrode
- 7: Kammerschicht
- 8: erste Platte
- 9: zweite Platte
- 10: Außenseite
- 11: Innenseite
- 12: Träger
- 13: Stempel
- 14: mikrostrukturierte Platte
- 15: erstes Stanzwerkzeug
- 16: zweites Stanzwerkzeug
- 17: Kappe
- 18: erstes Wellenteil
- 19: zweites Wellenteil
- 20: erstes Kugellager
- 21: zweites Kugellager
- 22: Klemme
- 23: Klemme
- 24: Isolierschicht
- 25: Speichermedium
- 30: Datenspeicher
- 31: Innenseite
- 32: Außenseite
- 33: Gleitkontakte
- 34: Kammer
- 35: erste Elektrode
- 36: zweite Elektrode
- 37: Kammerschicht
- 38: erste Platte
- 39: zweite Platte

## Patentansprüche

1. Selektiv veränderbarer, optischer Datenspeicher mit zwei Platten, von denen mindestens eine transparent ist, mit Elektroden und mit einem zwischen den Platten befindlichen, ein Gemisch von Feststoffteilchen mit einer flüssigkristallinen Phase aufweisenden Speichermedium, dadurch gekennzeichnet,
daß zwischen den Platten (8, 9, 38, 39) eine Kammerschicht (7, 37) mit Kammern (4, 34) angeordnet ist, in denen sich das Speichermedium (25) befindet, wobei die Größe der Kammern (4, 34) in Draufsicht an die Quelle der elektromagnetischen Strahlung oder an die erreichbare Fokussierung der elektromagnetischen Strahlung angepaßt ist.

2. Datenspeicher nach Anspruch 1, dadurch gekennzeichnet, daß die Kammern (4, 34) regelmäßig über die Kammerschicht (7, 37) verteilt sind.

3. Datenspeicher nach Anspruch 1 oder 2, dadurch gekennzeichnet, daß die Kammern (4, 34) in konzentrischen, spiralförmigen oder parallenen Spuren (3) angeordnet sind.

4. Datenspeicher nach Anspruch 1, dadurch gekennzeichnet, daß die Kammern (4, 34) unregelmäßig über die Kammerschicht (7, 37) verteilt sind.

5. Datenspeicher nach einem der Ansprüche 1 bis 4, dadurch gekennzeichnet, daß die Kammern (4, 34) in Draufsicht eine Fläche kleiner 0,5 µm² aufweisen.

6. Datenspeicher nach einem der Ansprüche 1 bis 5, dadurch gekennzeichnet, daß der seitliche Abstand der Kammern (4, 34) ≦0,2 µm ist.

7. Datenspeicher nach einem der Ansprüche 1 bis 6, dadurch gekennzeichnet, daß die Kammern (4, 34) mindestens einseitig offen sind, so daß das Speichermedium mindestens an eine Platte (8, 38 oder 9, 39) angrenzt.

8. Datenspeicher nach einem der Ansprüche 1 bis 6, dadurch gekennzeichnet, daß die Kammern (4, 34) als durch die Kammerschicht (7, 37) durchgehende Öffnungen ausgebildet sind.

9. Datenspeicher nach einem der Ansprüche 1 bis 6, 7 oder 8, dadurch gekennzeichnet, daß die Kammern (4, 34) Poren der Kammerschicht (7, 37) sind.

10. Datenspeicher nach einem der Ansprüche 1 bis 9, dadurch gekennzeichnet, daß das Material der Kammerschicht (7, 37) und das Speichermedium (25) einen etwa gleich großen Brechungsindex aufweisen.

11. Datenspeicher nach einem der Ansprüche 1 bis 10, dadurch gekennzeichnet, daß die Kammerschicht (7, 37) aus einer Filtermembrane besteht.

12. Datenspeicher nach einem der Ansprüche 1 bis 11, dadurch gekennzeichnet, daß die Platten (8, 38, 9, 39) als Elektroden (5, 35, 6, 36) an ihrer Innenseite (11, 31) eine elektrisch leitende Beschichtung tragen.

13. Datenspeicher nach einem der Ansprüche 1 bis 11, dadurch gekennzeichnet, daß die Platten (8, 38, 9, 39) aus einem transparenten leitfähigen Polymer bestehen, und somit auch die Elektroden (5, 35, 6, 36) bilden.

14. Datenspeicher nach einem der Ansprüche 1 bis 13, dadurch gekennzeichnet, daß mindestens die der transparenten Platte (8, 38 oder 9, 39) gegenüberliegende Platte (8, 38 oder 9, 39) an ihrer Innenseite (11, 31) eine reflektierende Schicht trägt.

15. Verfahren zur Herstellung selektiv, veränderbarer optischer Datenspeicher, bei dem ein optisches Speichermedium zwischen zwei Elektroden aufweisenden Platten angeordnet wird, dadurch gekennzeichnet,
daß zunächst eine der beiden Platten mit einer Kammerschicht verbunden wird,
daß dann das optische Speichermedium in die Kammern eingebracht wird und
daß die Kammerschicht zum Verschließen der Kammern mit der zweiten Platte verbunden wird.

16. Verfahren nach Anspruch 15, dadurch gekennzeichnet, daß die Kammerschicht zur Ausbildung der Kammern strukturiert wird.

17. Verfahren nach Anspruch 16, dadurch gekennzeichnet, daß die Kammern eingeprägt werden.

18. Verfahren nach Anspruch 16, dadurch gekennzeichnet, daß die Kammern photolithographisch oder röntgenlithographisch erzeugt werden.

19. Verfahren nach Anspruch 15 oder 16, dadurch gekennzeichnet, daß die Kammern als Vertiefungen oder als Durchgangslöcher mittels Beschuß von Strahlung oder Teilchen hergestellt werden.

20. Verfahren nach Anspruch 15, dadurch gekennzeichnet, daß eine Kammerschicht mit Poren verwendet wird, in die das Speichermedium eingebracht wird.

21. Verfahren nach einem der Ansprüche 15 bis 20, dadurch gekennzeichnet, daß eine erste Platte mindestens einseitig mit einer elektrisch leitenden Schicht versehen wird,
daß eine zweite Platte mindestens einseitig mit einer transparenten elektrisch leitenden Schicht versehen wird,
daß auf eine der beiden Platten die Kammerschicht aufgebracht wird,
daß mittels einer mikrostrukturierten Platte die Kammern eingeprägt werden,
daß das optische Speichermedium in die Kammern eingeführt wird und daß anschließend die zweite Platte auf die Kammerschicht aufgebracht wird.

22. Verfahren nach einem der Ansprüche 15 bis 21, dadurch gekennzeichnet, daß das optische Speichermedium im Tauchbad oder durch Aufsprühen in die Kammern eingefüllt wird.

23. Verfahren nach einem der Ansprüche 15 bis 22, dadurch gekennzeichnet, daß die Platten mit der Kammerschicht verklebt werden.

24. Verfahren nach einem der Ansprüche 15 bis 23, dadurch gekennzeichnet, daß das Einfüllen des optischen Speichermediums im Vakuum durchgeführt wird.
